# EUROPEAN PATENT APPLICATION

(11) **EP 4 154 788 A1**
(43) Date of publication of application: **29.03.2023**
(21) Application number: 21837554.1
(22) Date of filing: 11.06.2021
(51) Int. Cl.: A47L 11/24, A47L 11/40, G05D 1/02

(54) **LINEAR LASER BEAM-BASED METHOD AND DEVICE FOR OBSTACLE AVOIDANCE**

(30) Priority: 06.07.2020 CN 202010640093
(71) Applicant: Dreame Innovation Technology (Suzhou) Co., Ltd., Suzhou, Jiangsu 215104 (CN)
(72) Inventor: YANG, Dezhong, Suzhou, Jiangsu 215104 (CN)
(74) Representative: dompatent von Kreisler Selting Werner - Partnerschaft von Patent- und Rechtsanwälten mbB
(86) International application number: PCT/CN2021/099648
(87) International publication number: WO 2022/007591

(57) **Abstract**

Disclosed are a linear laser beam-based method and device for obstacle avoidance. The method comprises: transmitting two perpendicular linear laser beams to a target area; collecting a target area image; calculating the coordinates of a highlight formed by the linear laser beams in the target area; determining, on the basis of the coordinates of the highlight, whether an obstacle is present in the target area; if an obstacle is present and the height of the obstacle exceeds a preset obstacle avoidance range, then a sweeping machine avoids the obstacle; and if no obstacle is present, or, if the height of the obstacle does not exceed the preset obstacle avoidance range, then the sweeping machine passes through the target area. The laser beams are photographed by a lens when reflected, when an image of the laser beams is photographed by a camera, a coordinate analysis is performed with respect to a highlight in the image, thus recognizing obstacles such as a power cord, and preventing entanglement and collision; also allowing the recognition of a drop and an excessively high downward step, thus preventing a fall; also allowing the recognition of an upward step falling within the range of obstacle avoidance capability, thus preventing sweeping misses, implementing active obstacle avoidance, and increasing the work efficiency of the sweeping machine.

## Description

### TECHNICAL FIELD

The present application relates to a technical field of sweeping robots, in particular to an obstacle avoidance method and a device based on linear laser beams.

### BACKGROUND

With the development of information technology and the continuous improvement of people's requirements for the quality of life, smart home products gradually appear in people's daily life. Among them, a representative sweeping robot is more and more popular among people. The sweeping robot can perform the cleaning work of the area instead of people.

In the existing sweeping robot market, a lot of sweeping robots do not have the function of obstacle recognition and active obstacle avoidance. The sweeping robot mainly relies on the collision plate to trigger the formation of obstacles. The sweeping robot without active obstacle avoidance has poor user experience and causes great damage to furniture and walls. Small obstacles that cannot be cleaned will also increase the probability of a sweeper being stuck and a rolling brush of the sweeper being entangled.

### SUMMARY

In view of this, the present application provides an obstacle avoidance method and a device based on linear laser beams, so as to solve the problem of poor user experience of the sweeping robot due to the lack of active obstacle avoidance function of the sweeping robot in the prior art. The present application also solves the problem that the sweeping robot causes great damage to furniture and walls in the prior art. In addition, the present application solves the problem that the sweeping robot cannot clean small obstacles in the prior art, which leads to the increased probability of the cleaning machine being stuck and the rolling brush of the cleaning machine being entangled.

The present application provides an obstacle avoidance method based on linear laser beams, including:
emitting two intersecting linear laser beams to a target area;
capturing an image of the target area;
calculating coordinates of bright spots formed by the linear laser beams in the image of the target area; and
determining whether there is an obstacle in the target area according to the coordinates of the bright spots;
wherein if the obstacle exists and a height of the obstacle exceeds a preset obstacle-crossing range, a sweeper avoids the obstacle; and
if the obstacle does not exist or the height of the obstacle does not exceed the preset obstacle-crossing range, the sweeper passes through the target area.

Alternatively, emitting two intersecting linear laser beams to the target area by the two line laser transmitters, includes:
the two linear laser beam transmitters being installed on a side of the sweeper; and
taking a horizontal as a reference, emission ranges of the two linear laser beam transmitters being both upwards of 15° and downwards of 20°.

Alternatively, acquiring the image of the target area, includes:
acquiring the image of the target area by a camera;
the camera being installed on a side of the sweeper, and being located at an upper middle position of the two linear laser beam emitters; and
taking the horizontal as a reference, a shooting range of the camera is upwards of 35° and downwards of 35°.

Alternatively, wherein calculating the coordinates of the bright spots formed by the linear laser beams in the image of the target area, includes:
converting the coordinates of two-dimensional pixels in the image of the target area into three-dimensional world coordinates by a light plane calibration method;
finding a ground; and
calculating a height of a non-ground based on a height of the ground.

Alternatively, finding the ground, includes:
calculating a height mean square deviation of the three-dimensional world coordinates of a partial area in the image of the target area; and
analyzing a height flatness of the partial area according to the height mean square deviation to determine whether the partial area is the ground; or
determining whether the partial area is the ground according to a distance between the partial area and the sweeper.

Alternatively, determining whether there is an obstacle in the target area according to the coordinates of the bright spots, including:
calculating a height difference of all the bright spots relative to the ground, in a three-dimensional world coordinate system; and
determining whether the linear laser beams hit the obstacle according to the height difference.

Alternatively, after calculating the coordinates of the bright spots formed by the linear laser beams in the image of the target area, the method further includes:
identifying whether the target area is a cliff according to the coordinates of the bright spots; and
if the target area is the cliff, the sweeper avoids the target area.

Alternatively, an included angle formed by the two linear laser beams emitted by the two linear laser beam transmitters to the target area is 90°.

Alternatively, determining whether there is an obstacle in the target area according to the coordinates of the bright spots, includes:
obtaining a height, a length and a width of the obstacle in the target area according to the coordinates of the bright spots in consecutive N images; and
determining whether the obstacle is within the preset obstacle-crossing range according to the height, the length and the width of the obstacle.

The present application also provides an obstacle avoidance device based on linear laser beams, including:
two linear laser beam transmitters configured to emit two intersecting linear laser beams to a target area;
a camera configured to capture an image of the target area; and
a processing unit configured to calculate coordinates of bright spots formed by the linear laser beams in the image of the target area;
wherein the processing unit is further configured to determine whether there is an obstacle in the target area according to the coordinates of the bright spots;
if the obstacle exists, and a height of the obstacle calculated by the processing unit exceeds a preset obstacle-crossing range, the control unit controls a sweeper to avoid the obstacle;
if the obstacle does not exist, or the height of the obstacle calculated by the processing unit does not exceed the preset obstacle-crossing range, the control unit controls the sweeper to pass through the target area.

Alternatively, the two linear laser beam transmitters are installed on a side of the sweeper; and
wherein taking a horizontal as a reference, emission ranges of the two linear laser beam transmitters are both upwards of 15° and downwards of 20°.

Alternatively, the camera is installed on a side of the sweeper, and is located at an upper middle position of the two linear laser beam emitters; and
wherein taking the horizontal as a reference, a shooting range of the camera is upwards of 35° and downwards of 35°.

Alternatively, the processing unit is configured to:
convert the coordinates of two-dimensional pixels in the image of the target area into three-dimensional world coordinates by a light plane calibration method;
find a ground; and
calculate a height of a non-ground based on a height of the ground.

Alternatively, the processing unit is configured to:
calculate a height mean square deviation of the three-dimensional world coordinates of a partial area in the image of the target area; and
analyze a height flatness of the partial area according to the height mean square deviation to determine whether the partial area is the ground; or
determine whether the partial area is the ground according to a distance between the partial area and the sweeper.

Alternatively, the processing unit is configured to:
calculate a height difference of all the bright spots relative to the ground, in a three-dimensional world coordinate system; and
determine whether the linear laser beams hit the obstacle according to the height difference.

Alternatively, the processing unit is configured to:
identify whether the target area is a cliff according to the coordinates of the bright spots; and
control the sweeper to avoid the target area if the target area is the cliff.

Alternatively, an included angle formed by the two linear laser beams emitted by the two linear laser beam transmitters to the target area is 90°.

The obstacle avoidance method and the device based on the linear laser beams provided by the present application, by irradiating the shooting area with the laser beam, the laser beam is captured by the camera after being reflected. After the camera captures the laser image, it analyzes the coordinates of the bright spots in the image, so as to identify obstacles such as power lines and prevent entanglement and collision. The application is also able to identify cliffs and too high descending steps, preventing falls. The present application can also identify the upper steps within the obstacle-crossing capability, and prevent missed sweeps, thereby realizing active obstacle avoidance and improving the working efficiency of the sweeper.

### BRIEF DESCRIPTION OF DRAWINGS

The features and advantages of the present invention will be more clearly understood by reference to the accompanying drawings, which are schematic and should not be construed as limiting the present invention in any way, in which:
FIG. 1 shows a flow chart of an obstacle avoidance method based on linear laser beams in the present application;
FIG. 2 shows four application scenarios of the obstacle avoidance method based on the linear laser beams in the present application;
FIG. 3 shows a side structure view of a sweeper applying the obstacle avoidance method based on the linear laser beams in the present application; and
FIG. 4 shows laser beams and a photographing range image for an obstacle avoidance method based on linear laser beams in the present application.

### DETAILED DESCRIPTION

In order to make the purpose, technical solutions and advantages of the embodiments of the present invention clearer, the technical solutions in the embodiments of the present invention will be described clearly and completely below with reference to the accompanying drawings in the embodiments of the present invention. Obviously, the described embodiments are some, but not all, embodiments of the present invention. Based on the embodiments of the present invention, all other embodiments obtained by those skilled in the art without creative efforts shall fall within the protection scope of the present invention.

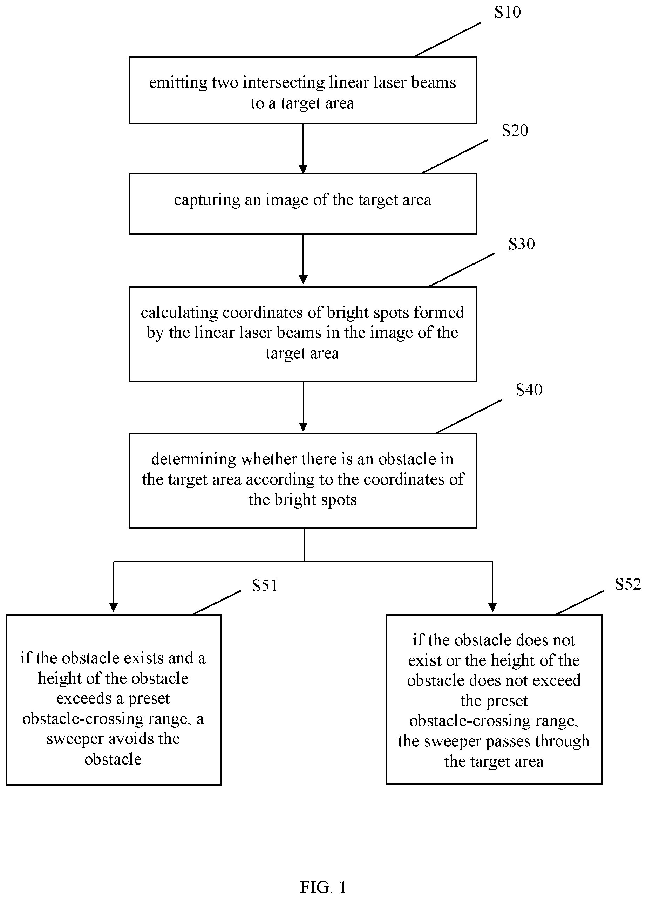

The present application provides an obstacle avoidance method based on linear laser beams, as shown in FIG. 1, including:
Step S10, emitting two intersecting linear laser beams to a target area.

In this embodiment, an included angle formed by planes where the two linear laser beams are located is 90 degrees, and the planes where the two linear laser beams are located are both perpendicular to the ground. By setting the included angle of the two linear laser beams to 90 degrees, it can be ensured that an included angle between at least one of the linear laser beams and a side of an obstacle facing a camera of a sweeping robot is not 90 degrees.

Step S20, capturing an image of the target area.

In this embodiment, laser beams emitted by laser transmitters are captured by the camera after being reflected. After the camera captures a laser image, it searches pixel-by-pixel line to find bright spots.

Step S30, calculating coordinates of the bright spots formed by the linear laser beams in the image of the target area.

In this embodiment, the two-dimensional pixel coordinates of the laser spots are converted into three-dimensional coordinates through a light plane equation.

Step S40, determining whether there is an obstacle in the target area according to the coordinates of the bright spots.

In this embodiment, a height information can be obtained by analyzing the three-dimensional coordinates of the bright spots. According to the height information, it can be determined whether the object irradiated by the laser is an obstacle or not.

In a specific embodiment, a ground information can be quickly judged by a distance between the bright spots and the sweeping robot.

Step S51, if the obstacle exists and a height of the obstacle exceeds a preset obstacle-crossing range, the sweeper avoids the obstacle.

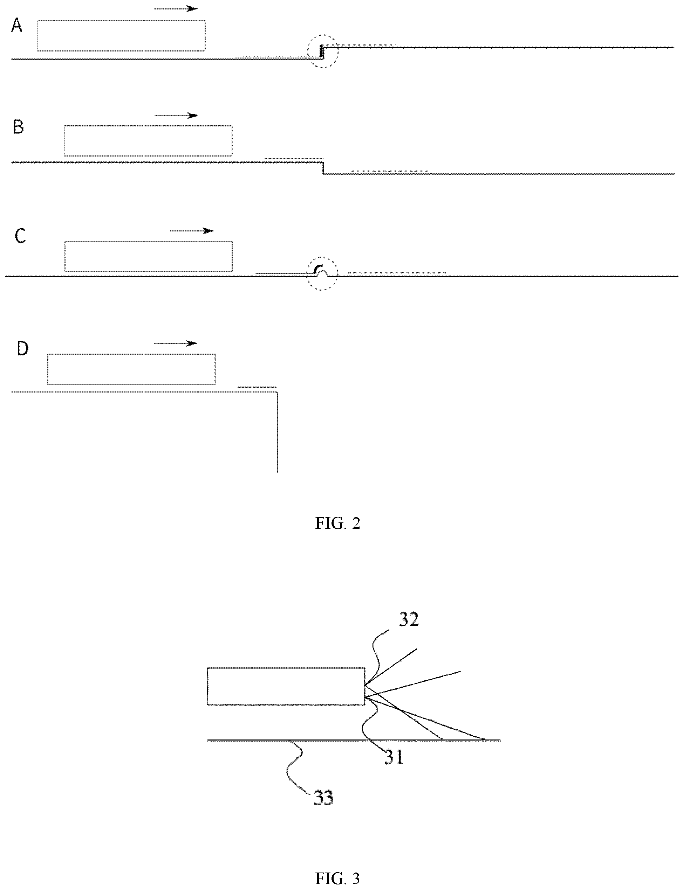

In this embodiment, as shown in FIG. 2, upper and lower steps shown in scenarios A and B can be passed if the height is within an obstacle-crossing range, and can be avoided if they are outside the obstacle-crossing range. Obstacles lower than a sweeper body shown in scenario C can be identified. And, according to the surrounding obstacles, it is judged whether it is an obstacle that can be cleaned or an obstacle that needs to be avoided. A cliff situation shown in scenario D can be accurately avoided by determining whether it is a cliff by identifying the ground situation.

Step S52, if there is no obstacle, or the height of the obstacle does not exceed the preset obstacle-crossing range, the sweeper passes through the target area.

In this embodiment, as shown in FIG. 2, if the heights of the obstacles in the scenarios A, B, and C are within the preset obstacle-crossing range. That is, if the height of the obstacle does not exceed 2 cm, the sweeper can overcome the obstacle.

The obstacle avoidance method based on the linear laser beams provided by the embodiment, by irradiating the shooting area with the laser beam, the laser beam is captured by the camera after being reflected. After the camera captures the laser image, it analyzes the coordinates of the bright spots in the image, so as to identify obstacles such as power lines and prevent entanglement and collision. The application is also able to identify cliffs and too high descending steps, preventing falls. The present application can also identify the upper steps within the obstacle-crossing capability, and prevent missed sweeps, thereby realizing active obstacle avoidance and improving the working efficiency of the sweeper.

As an optional embodiment, the step S10 includes: two linear laser beam transmitters 31 installed on a side of the sweeper. Taking a horizontal as a reference, emission ranges of the two linear laser beam transmitters are both upwards of 15° and downwards of 20°.

As shown in FIG. 3, the laser emitted by the laser transmitter irradiates the area near the sweeper.

As an optional embodiment, the step S20 includes:
acquiring the image of the target area by a camera 32;
the camera 32 being installed on a side of the sweeper, and being located at an upper middle position of the two linear laser beam emitters 31; and
taking the horizontal as a reference, a shooting range of the camera 32 is upwards of 35° and downwards of 35°.

In this embodiment, as shown in FIG. 3, the shooting range of the camera on the ground is wider than the irradiation range of the laser transmitter.

As an optional embodiment, the step S30 includes:
converting the coordinates of two-dimensional pixels in the image of the target area into three-dimensional world coordinates by a light plane calibration method;
finding a ground; and
calculating a height of a non-ground based on a height of the ground.

In this embodiment, after the three-dimensional coordinates are obtained, the z-axis height in the three-dimensional coordinates of the ground area is found through analysis, and then the height difference between other planes and the ground is calculated. Based on the height of the ground information, the height difference between other non-ground heights and ground heights is calculated. If the height difference is outside the obstacle clearance height range, it is an obstacle.

As an optional embodiment, finding the ground includes:
calculating a height mean square deviation of the three-dimensional world coordinates of a partial area in the image of the target area; and
analyzing a height flatness of the partial area according to the height mean square deviation to determine whether the partial area is the ground; or
determining whether the partial area is the ground according to a distance between the partial area and the sweeper.

In this embodiment, due to measurement error, the actual measurement may be -2 mm or -5 mm. Through the stability analysis, the height of the ground is confirmed; or the ground information is determined according to the area closer to the sweeper in the image.

As an optional embodiment, the step S40 includes:
calculating a height difference of all the bright spots relative to the ground, in a three-dimensional world coordinate system; and
determining whether the linear laser beams hit the obstacle according to the height difference.

In this embodiment, the three-dimensional coordinates include the position (x, y) and the height information (z) of the obstacle. Based on the height difference between the height information (z) and the ground height found in the step S30, it can be determined whether there is an obstacle in the area irradiated by the laser beam.

As an optional embodiment, after the step S30, it further includes:
identifying whether the target area is a cliff according to the coordinates of the bright spots; and
if the target area is the cliff, the sweeper avoids the target area.

In this embodiment, as shown in the scenario D in FIG. 2, the bright spots in the image is disconnected at an edge of the cliff, so it can be determined that the captured image is a cliff, such as stairs, and the sweeper avoids this area.

As an optional embodiment, an included angle formed by the two linear laser beams 3101 and 3102 emitted by the two linear laser beam transmitters 31 to the target area is 90°.

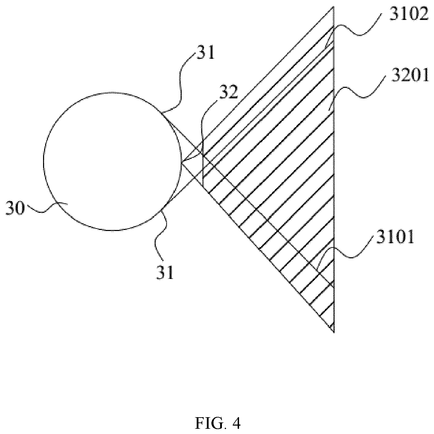

In this embodiment, as shown in FIG. 4, the camera 32 is located in the middle of the two linear laser beam transmitters 31. The camera 32 and the two linear laser beam transmitters 31 are installed on a side of the sweeper 30.

The intersection of the two linear laser beams 3101 and 3102 emitted by the two linear laser beam transmitters 31 to the target area is within the shooting range 3201 of the two cameras 32.

In a specific embodiment, both the laser irradiation range and the shooting range of the camera can be adjusted by the installation height on the sweeper.

As an optional embodiment, the step S40 includes:
obtaining a height, a length and a width of the obstacle in the target area according to the coordinates of the bright spots in consecutive N images; and
determining whether the obstacle is within the preset obstacle-crossing range according to the height, the length and the width of the obstacle.

In this embodiment, as shown in the scenario C in FIG. 2, the bright spots in the image are three segments, two of which are continuous, the other segment is disconnected from the previous two segments, and the two consecutive bright spots are bent. In this case, it can be determined that there is an obstacle. In a specific embodiment, the selection criteria for consecutive N images are: from the first image of the obstacle to the last image.

The height of the obstacle is calculated from the height difference of all bright spots relative to the ground. The length and width of the obstacle are calculated according to the coordinates of the x-axis and y-axis of the bright spot.

In a specific embodiment, as shown in the scenario A and the scenario B in FIG. 2, it can be known from the coordinate information of the bright spots that there are steps in the image. If the height of the steps does not exceed 2 cm, the sweeping robot can pass. If the height of the step is more than 2 cm, the sweeping robot will avoid it. As shown in the scenario C in FIG. 2, assuming that the obstacle is a wire, the distribution of the wire can be judged through multiple consecutive images. At the same time, even if the height of the wire does not exceed 2 cm, the robot also avoids the obstacle here. As shown in the scenario D in FIG. 2, if the bright spots are disconnected in a certain area, and the step height cannot be measured, it is determined that the area is a cliff, and the sweeping robot avoids it.

The present application further provides an obstacle avoidance device based on linear laser beams, including: two linear laser beam transmitters configured to emit two intersecting linear laser beams to a target area; a camera configured to capture an image of the target area; and a processing unit configured to calculate coordinates of bright spots formed by the linear laser beams in the image of the target area; wherein the processing unit is further configured to determine whether there is an obstacle in the target area according to the coordinates of the bright spots; if the obstacle exists, and a height of the obstacle calculated by the processing unit exceeds a preset obstacle-crossing range, the control unit controls a sweeper to avoid the obstacle; if the obstacle does not exist, or the height of the obstacle calculated by the processing unit does not exceed the preset obstacle-crossing range, the control unit controls the sweeper to pass through the target area.

As an optional embodiment, the two linear laser beam transmitters are installed on a side of the sweeper. Taking a horizontal as a reference, emission ranges of the two linear laser beam transmitters are both upwards of 15° and downwards of 20°.

As an optional embodiment, the camera is installed on a side of the sweeper, and is located at an upper middle position of the two linear laser beam emitters. Taking the horizontal as a reference, a shooting range of the camera is upwards of 35° and downwards of 35°.

As an optional embodiment, the processing unit is configured to: convert the coordinates of two-dimensional pixels in the image of the target area into three-dimensional world coordinates by a light plane calibration method; find a ground; and calculate a height of a non-ground based on a height of the ground.

As an optional embodiment, the processing unit is configured to: calculate a height mean square deviation of the three-dimensional world coordinates of a partial area in the image of the target area; and analyze a height flatness of the partial area according to the height mean square deviation to determine whether the partial area is the ground; or determine whether the partial area is the ground according to a distance between the partial area and the sweeper.

As an optional embodiment, the processing unit is configured to: calculate a height difference of all the bright spots relative to the ground, in a three-dimensional world coordinate system; and determine whether the linear laser beams hit the obstacle according to the height difference.

As an optional embodiment, the processing unit is configured to: identify whether the target area is a cliff according to the coordinates of the bright spots; and control the sweeper to avoid the target area if the target area is the cliff.

As an optional embodiment, an included angle formed by the two linear laser beams emitted by the two linear laser beam transmitters to the target area is 90°.

The specific details of the above-mentioned obstacle avoidance device based on the linear laser beams can be understood by referring to the corresponding descriptions and effects in the embodiments shown in FIG. 1 to FIG. 4, which will not be repeated here.

It is understandable to those skilled in the art that all or part of the processes in the method of the above embodiments can be implemented by instructing relevant hardware through a computer program. The program can be stored in a computer-readable storage medium. When the program is executed, it may include the processes of the embodiments of the above-mentioned method. The storage medium may be a magnetic disk, an optical disk, a read-only memory (ROM), a random access memory (RAM), a flash memory, a hard disk drive (HDD) or a solid-state drive (SSD) and so on. The storage medium may also include a combination of the aforementioned kinds of memories.

Although the embodiments of the present invention have been described in conjunction with the accompanying drawings, various modifications and variations can be made by those skilled in the art without departing from the spirit and scope of the present invention, such modifications and variations are within the scope defined by the appended claims.

## Claims

1. An obstacle avoidance method based on linear laser beams, comprising:
emitting two intersecting linear laser beams to a target area;
capturing an image of the target area;
calculating coordinates of bright spots formed by the linear laser beams in the image of the target area; and
determining whether there is an obstacle in the target area according to the coordinates of the bright spots;
wherein if the obstacle exists and a height of the obstacle exceeds a preset obstacle-crossing range, a sweeper avoids the obstacle; and
if the obstacle does not exist, the sweeper passes through the target area.

2. The obstacle avoidance method according to claim 1, wherein emitting two intersecting linear laser beams to the target area, comprises:
two linear laser beam transmitters being installed on a side of the sweeper; and
taking a horizontal as a reference, emission ranges of the two linear laser beam transmitters being both upwards of 15° and downwards of 20°.

3. The obstacle avoidance method according to claim 2, wherein acquiring the image of the target area, comprises:
acquiring the image of the target area by a camera;
the camera being installed on a side of the sweeper, and being located at an upper middle position of the two linear laser beam emitters; and
taking the horizontal as a reference, a shooting range of the camera is upwards of 35° and downwards of 35°.

4. The obstacle avoidance method according to any one of claims 1 to 3, wherein calculating the coordinates of the bright spots formed by the linear laser beams in the image of the target area, comprises:
converting the coordinates of two-dimensional pixels in the image of the target area into three-dimensional world coordinates by a light plane calibration method;
finding a ground; and
calculating a height of a non-ground based on a height of the ground.

5. The obstacle avoidance method according to claim 4, wherein finding the ground, comprises:
calculating a height mean square deviation of the three-dimensional world coordinates of a partial area in the image of the target area; and
analyzing a height flatness of the partial area according to the height mean square deviation to determine whether the partial area is the ground; or
determining whether the partial area is the ground according to a distance between the partial area and the sweeper.

6. The obstacle avoidance method according to claim 4, wherein determining whether there is an obstacle in the target area according to the coordinates of the bright spots, comprising:
calculating a height difference of all the bright spots relative to the ground, in a three-dimensional world coordinate system; and
determining whether the linear laser beams hit the obstacle according to the height difference.

7. The obstacle avoidance method according to any one of claims 1 to 3, wherein after calculating the coordinates of the bright spots formed by the linear laser beams in the image of the target area, the method further comprises:
identifying whether the target area is a cliff according to the coordinates of the bright spots; and
if the target area is the cliff, the sweeper avoids the target area.

8. The obstacle avoidance method according to any one of claims 1 to 3, wherein an included angle formed by the two linear laser beams emitted by the two linear laser beam transmitters to the target area is 90°.

9. The obstacle avoidance method according to claim 8, wherein planes on which the two linear laser beams are located are both perpendicular to the ground.

10. The obstacle avoidance method according to any one of claims 1 to 3, wherein determining whether there is an obstacle in the target area according to the coordinates of the bright spots, comprises:
obtaining a height, a length and a width of the obstacle in the target area according to the coordinates of the bright spots in consecutive N images; and
determining whether the obstacle is within the preset obstacle-crossing range according to the height, the length and the width of the obstacle.

11. An obstacle avoidance device based on linear laser beams, comprising:
two linear laser beam transmitters configured to emit two intersecting linear laser beams to a target area;
a camera configured to capture an image of the target area; and
a processing unit configured to calculate coordinates of bright spots formed by the linear laser beams in the image of the target area;
wherein the processing unit is further configured to determine whether there is an obstacle in the target area according to the coordinates of the bright spots;
if the obstacle exists, and a height of the obstacle calculated by the processing unit exceeds a preset obstacle-crossing range, the control unit controls a sweeper to avoid the obstacle;
if the obstacle does not exist, or the height of the obstacle calculated by the processing unit does not exceed the preset obstacle-crossing range, the control unit controls the sweeper to pass through the target area.

12. The obstacle avoidance device according to claim 11, wherein the two linear laser beam transmitters are installed on a side of the sweeper; and
wherein taking a horizontal as a reference, emission ranges of the two linear laser beam transmitters are both upwards of 15° and downwards of 20°.

13. The obstacle avoidance device according to claim 12, wherein the camera is installed on a side of the sweeper, and is located at an upper middle position of the two linear laser beam emitters; and
wherein taking the horizontal as a reference, a shooting range of the camera is upwards of 35° and downwards of 35°.

14. The obstacle avoidance device of any one of claims 11 to 13, wherein the processing unit is configured to:
convert the coordinates of two-dimensional pixels in the image of the target area into three-dimensional world coordinates by a light plane calibration method;
find a ground; and
calculate a height of a non-ground based on a height of the ground.

15. The obstacle avoidance device according to claim 14, wherein the processing unit is configured to:
calculate a height mean square deviation of the three-dimensional world coordinates of a partial area in the image of the target area; and
analyze a height flatness of the partial area according to the height mean square deviation to determine whether the partial area is the ground; or
determine whether the partial area is the ground according to a distance between the partial area and the sweeper.

16. The obstacle avoidance device according to claim 14, wherein the processing unit is configured to:
calculate a height difference of all the bright spots relative to the ground, in a three-dimensional world coordinate system; and
determine whether the linear laser beams hit the obstacle according to the height difference.

17. The obstacle avoidance device of any one of claims 11 to 13, wherein the processing unit is configured to:
identify whether the target area is a cliff according to the coordinates of the bright spots; and
control the sweeper to avoid the target area if the target area is the cliff.

18. The obstacle avoidance device of any one of claims 11 to 13, wherein an included angle formed by the two linear laser beams emitted by the two linear laser beam transmitters to the target area is 90°.

19. The obstacle avoidance device according to claim 18, wherein planes on which the two linear laser beams are located are both perpendicular to the ground.
